# EUROPEAN PATENT SPECIFICATION

(11) **EP 3 660 489 B1**
(45) Date of publication and mention of the grant of the patent: **07.10.2026**
(21) Application number: 18851830.2
(22) Date of filing: 22.08.2018
(51) Int. Cl.: G01N 21/3586, G01N 21/17

(54) **OPTICAL MEASURING DEVICE, MEASURING METHOD, PROGRAM, AND RECORDING MEDIUM**
VORRICHTUNG ZUR OPTISCHEN MESSUNG, MESSVERFAHREN, PROGRAMM UND AUFZEICHNUNGSMEDIUM
DISPOSITIF DE MESURE OPTIQUE, PROCÉDÉ DE MESURE, PROGRAMME ET SUPPORT D'ENREGISTREMENT

(30) Priority: 31.08.2017 JP 2017167268
(43) Date of publication of application: 03.06.2020
(73) Proprietor: Pioneer Corporation, Tokyo 113-0021 (JP)
(72) Inventor: YAMAGUCHI, Atsushi, Kawagoe-shi Saitama 350-8555 (JP)
(74) Representative: Manitz Finsterwald Patent- und Rechtsanwaltspartnerschaft mbB
(86) International application number: PCT/JP2018/030912
(87) International publication number: WO 2019/044600

(56) References cited:
- EP-A1- 2 157 420
- WO-A1-2006/085403
- JP-A- 2008 151 618
- JP-A- 2011 191 128
- JP-A- 2012 185 012
- JP-A- 2013 088 375
- JP-A- 2013 170 899
- JP-A- 2014 194 344
- JP-A- 2014 222 157
- JP-A- 2016 114 371
- JP-A- 2017 020 837
- JP-A- 2017 026 358
- US-A1- 2013 218 008
- US-A1- 2014 209 802
- US-A1- 2015 008 324

## Description

### TECHNICAL FIELD

The present invention relates to an optical measurement apparatus for measuring and analyzing a characteristic of a sample by irradiating the sample with electromagnetic waves, as well as a measurement method, a program, and a recording medium.

### BACKGROUND ART

A technique for irradiating a sample with terahertz waves that are electromagnetic waves in a frequency band between radio waves and infrared rays (for example, 0.1 to 10 THz) and measuring reflected waves or transmitted waves from the sample by time-domain spectroscopy has heretofore been known. For example, an internal configuration and the like of the sample can thereby be inspected without destruction of the sample. For example, JP 2017-026358 A discloses a measurement apparatus including a generation unit of terahertz wave pulses and a detection unit of terahertz wave pulses from a measuring object.

US 2014/0209802 A1, US 2013/0218008 A1 and US 2015/0008324 A1 respectively disclose an optical measurement apparatus in which the focusing position of the electromagnetic wave pulse is moved in a direction parallel to the optical axis of the electromagnetic wave pulse.

### SUMMARY OF INVENTION

### TECHNICAL PROBLEM

An optical measurement apparatus can inspect a cross-sectional structure of a sample, for example, by scanning and irradiating the sample with pulsed electromagnetic waves and measuring electromagnetic waves (reflected waves) reflected from the sample at respective scan positions of the electromagnetic waves by a time-of-flight method. For example, the optical measurement apparatus generates time waveforms of a detection signal representing the reflected waves from the sample at the respective scan positions, and generates a tomographic image of the sample on the basis of peaks (pulse positions) in the time waveforms.

If, for example, the sample includes a plurality of layers of materials, the reflected waves from the sample include reflected waves from the surface of the sample and reflected waves from the interfaces between the layers in the sample. The reflected waves from the sample have respective different optical lengths (optical distances) from irradiation of the sample to arrival at a light reception unit of the apparatus. The peaks in the time waveforms can thus be located at positions different from those corresponding to the actual interfaces between the layers.

In such a case, an accurate tomographic image can be unobtainable. For example, if the actual sample has a flat interface, the flat interface can be displayed in a curved shape or as an uneven surface in the tomographic image. This can interfere with accurate comprehension of the cross-sectional structure of the sample.

The present invention has been achieved in view of the foregoing, and an object thereof is to provide an optical measurement apparatus capable of performing appropriate processing on time waveforms of electromagnetic waves from a sample at respective scan positions to accurately and clearly find out a cross-sectional structure of the sample, as well as a measurement method, a program, and a recording medium.

### SOLUTION TO PROBLEM

The invention is defined by the independent claims.

### BRIEF DESCRIPTION OF DRAWINGS

FIG. 1 is a perspective view of an optical measurement apparatus according to a first embodiment.
FIG. 2 is a diagram illustrating a configuration of a scan head in the optical measurement apparatus according to the first embodiment.
FIG. 3 is a block diagram of a signal processing unit in the optical measurement apparatus according to the first embodiment.
FIG. 4 is a block diagram of a waveform correction unit in the optical measurement apparatus according to the first embodiment.
FIG. 5 is a diagram illustrating an example of uncorrected time waveforms generated by the optical measurement apparatus according to the first embodiment.
FIG. 6 is a diagram illustrating an example of an uncorrected tomographic image generated by the optical measurement apparatus according to the first embodiment.
FIG. 7 is a diagram illustrating an example of corrected time waveforms generated by the optical measurement apparatus according to the first embodiment.
FIG. 8 is a diagram illustrating an example of a corrected tomographic image generated by the optical waveform correction unit configured to detect at least one peak in each of the time waveforms, and correct each of the time waveforms on the basis of each of positions of the at least one peak in the time waveforms.

### BRIEF DESCRIPTION OF DRAWINGS

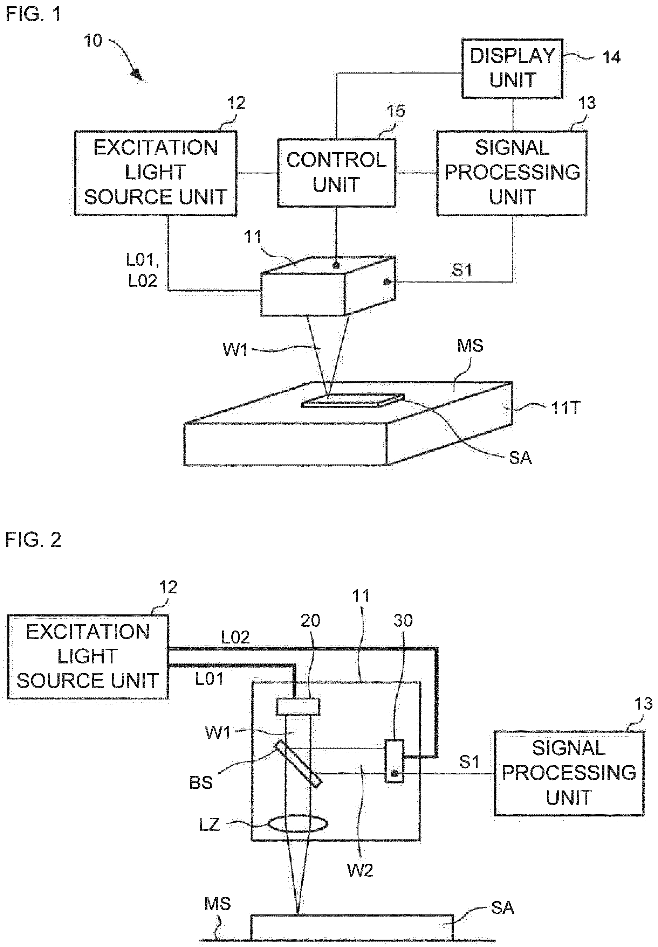

FIG. 1 is a perspective view of an optical measurement apparatus according to a first embodiment.
FIG. 2 is a diagram illustrating a configuration of a scan head in the optical measurement apparatus according to the first embodiment.

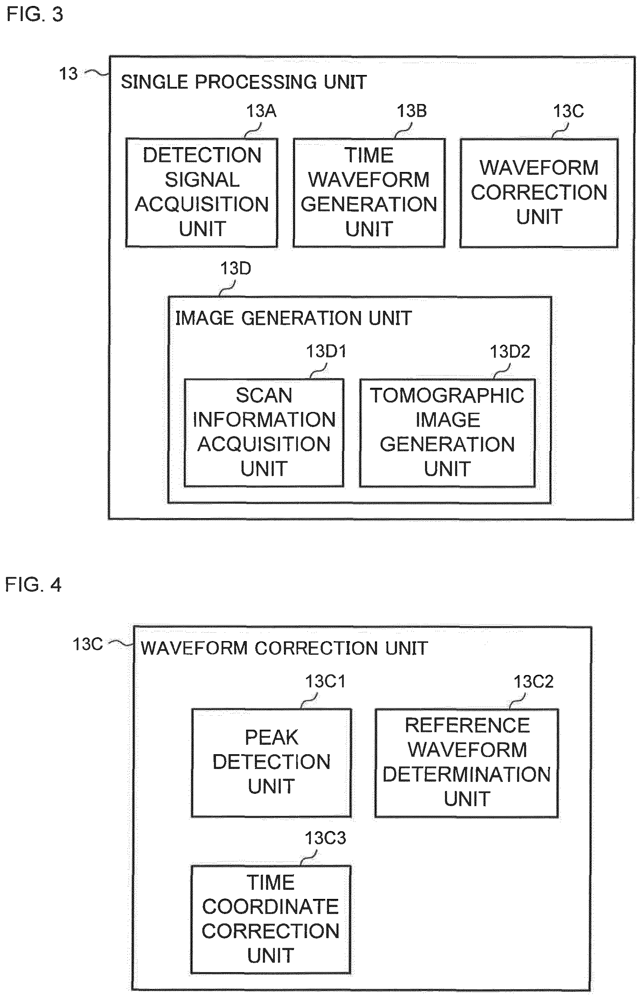

FIG. 3 is a block diagram of a signal processing unit in the optical measurement apparatus according to the first embodiment.
FIG. 4 is a block diagram of a waveform correction unit in the optical measurement apparatus according to the first embodiment.

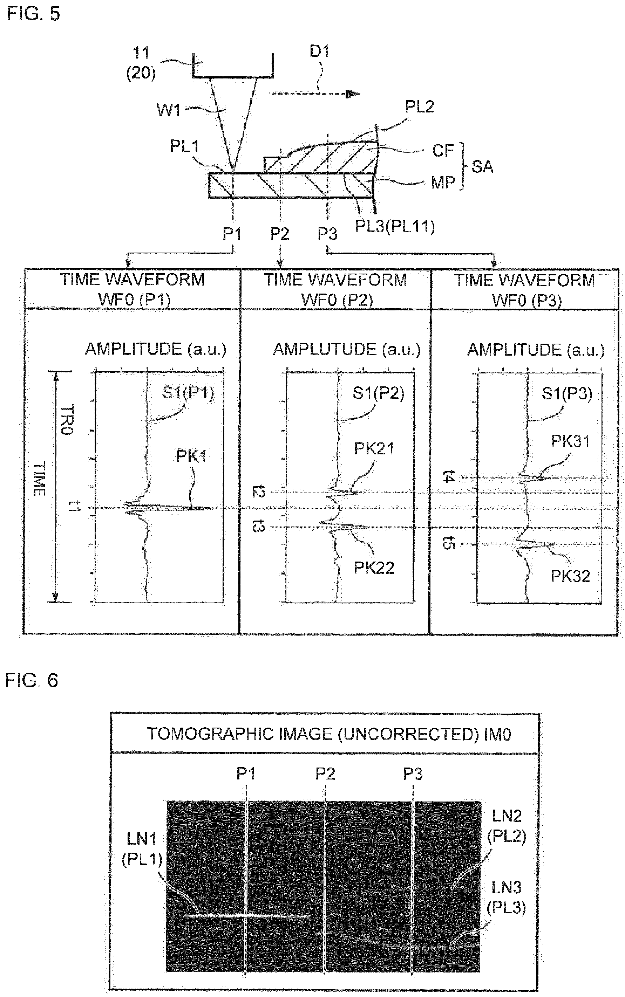

FIG. 5 is a diagram illustrating an example of uncorrected time waveforms generated by the optical measurement apparatus according to the first embodiment.
FIG. 6 is a diagram illustrating an example of an uncorrected tomographic image generated by the optical measurement apparatus according to the first embodiment.

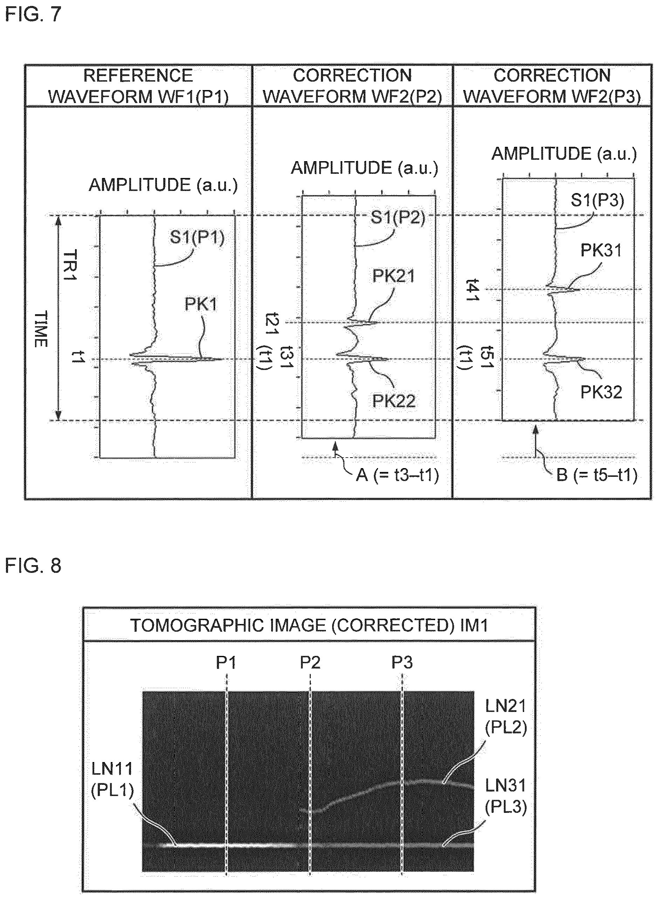

FIG. 7 is a diagram illustrating an example of corrected time waveforms generated by the optical measurement apparatus according to the first embodiment.
FIG. 8 is a diagram illustrating an example of a corrected tomographic image generated by the optical measurement apparatus according to the first embodiment.

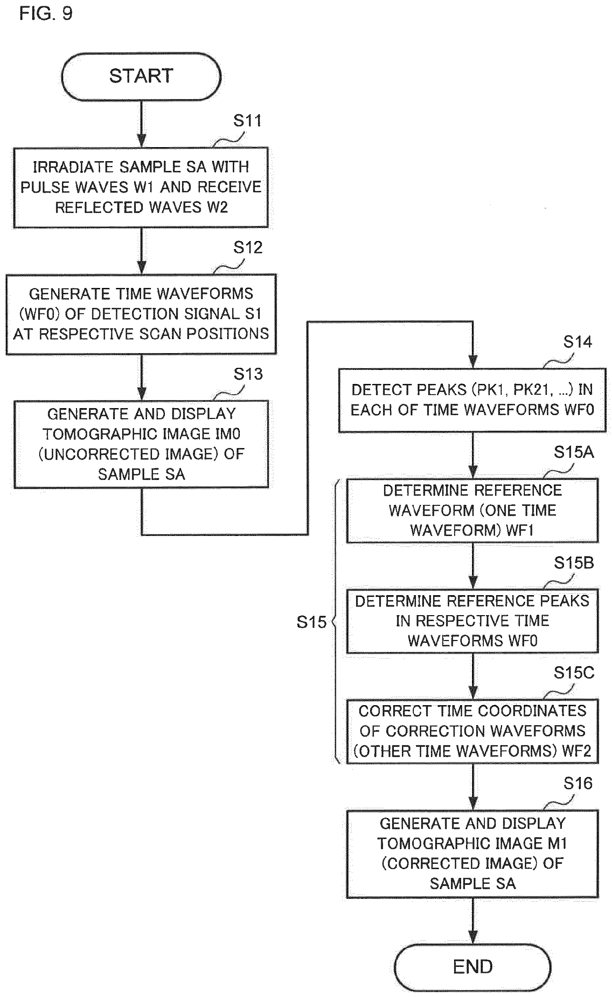

FIG. 9 is a diagram illustrating an operation flow of the optical measurement apparatus according to the first embodiment.

### DESCRIPTION OF EMBODIMENTS

An embodiment of the present invention will be described in detail below.

### First Embodiment

FIG. 1 is a diagram schematically illustrating a configuration of an optical measurement apparatus 10 according to a first embodiment. FIG. 2 is a diagram schematically illustrating a configuration of a scan head 11 in the optical measurement apparatus 10. The overall configuration of the optical measurement apparatus 10 will be described with reference to FIGs. 1 and 2.

Initially, as illustrated in FIG. 1, the optical measurement apparatus 10 includes the scan head 11 that scans and irradiates a sample SA with pulsed electromagnetic waves (may be referred to as pulse waves or scan waves) W1. The scan head 11 functions as an irradiation unit of the pulse waves W1. The scan head 11 also functions as a reception unit that receives reflected waves W2 of the pulse waves W1 from the sample SA.

In the present embodiment, the optical measurement apparatus 10 is a measurement apparatus that irradiates the sample (object to be measured) SA with terahertz waves as the pulse waves W1 and measures the terahertz waves reflected from the sample SA by time-domain spectroscopy. As employed herein, terahertz waves refer to electromagnetic waves in a frequency band between radio waves and infrared rays (for example, 0.1 to 10 THz).

In the present embodiment, the optical measurement apparatus 10 includes a mounting table 11T having a mounting surface MS for the sample SA. The scan head 11 includes an opposed surface which is opposed to the mounting surface MS of the mounting table 11T. An opening (not illustrated) serving as an emitting portion of the pulse waves W1 and an incident portion (light receiving portion) of the reflected waves W2 is formed in the opposed surface.

The scan head 11 also includes a moving mechanism (not illustrated) that moves the emitting portion of the pulse waves W1 in an in-plane direction of the mounting surface MS (direction parallel to the mounting surface MS). The area (irradiated point) to be irradiated with the pulse waves W1 on the mounting surface MS is moved by the moving mechanism, whereby the pulse waves W1 are scanned over the sample SA.

In the present embodiment, the optical measurement apparatus 10 includes an electromagnetic wave generation element and an electromagnetic wave detection element in the scan head 11. The optical measurement apparatus 10 includes an excitation light source unit 12 that generates excitation light L01 and L02 for exciting the electromagnetic wave generation element and the electromagnetic wave detection element, respectively. The excitation light source unit 12 generates laser light pulsed to have a femtosecond pulse width as the excitation light L01 and L02.

In the scan head 11, the electromagnetic wave generation element emits the pulse waves W1 toward the sample SA, and the electromagnetic wave detection element receives the reflected waves of the pulse waves W1 from the sample SA. The electromagnetic wave detection element generates a signal (detection signal) S1 representing the reflected waves received from the sample SA. The optical measurement apparatus 10 includes a signal processing unit 13 that performs various types of signal processing on the detection signal S1.

The optical measurement apparatus 10 includes a display unit 14 that displays a processing result processed by the signal processing unit 13. In the present embodiment, the signal processing unit 13 generates a tomographic image or the like of the sample SA, which the display unit 14 displays. The optical measurement apparatus 10 also includes a control unit 15 that controls operation of the scan head 11, the excitation light source unit 12, the signal processing unit 13, and the display unit 14.

Next, the scan head 11 will be described with reference to FIG. 2. The scan head 11 includes an electromagnetic wave generation element 20 and an electromagnetic wave detection element 30 inside. The electromagnetic wave generation element 20 is a terahertz wave generation element that is excited by the excitation light L01 and generates terahertz waves as the pulse waves W1. The scan head 11 scans and irradiates the sample SA with the pulse waves W1.

The electromagnetic wave detection element 30 is a terahertz wave detection element that is excited by the excitation light L02 and receives and detects terahertz waves as the electromagnetic waves (may be referred to as reflected waves or reception waves) W2 reflected from the sample SA. The electromagnetic wave detection element 30 functions as the reception unit of the reflected waves W2 in the scan head 11.

In the present embodiment, the scan head 11 includes a condenser lens LZ that condenses the pulse waves W1 and a beam splitter BS that separates the reflected waves W2 from the pulse waves W1 and makes the reflected waves W2 incident on the electromagnetic wave detection element 30.

In the present embodiment, the excitation light source unit 12 also includes an optical delay device (not illustrated) that causes the excitation light L02 to arrive at the electromagnetic wave detection element 30 with a delay. The optical measurement apparatus 10 adjusts the time of arrival of the excitation light L02 at the electromagnetic wave detection element 30 by using the optical delay device, and thereby disperses the terahertz waves that are the reflected waves W2 in a time domain for measurement.

FIG. 3 is a block diagram illustrating a configuration of the signal processing unit 13. In the present embodiment, the signal processing unit 13 includes a detection signal acquisition unit (hereinafter, referred to simply as a signal acquisition unit) 13A that obtains the signal (detection signal) S1 representing the reflected waves W2 corresponding to respective scan positions of the pulse waves W1 by the scan head 11. For example, the signal acquisition unit 13A obtains scan position information about the pulse waves W1 from the control unit 15, and obtains the detection signal S1 of the reflected waves W2 from the electromagnetic wave detection element 30 of the scan head 11.

The signal processing unit 13 also includes a time waveform generation unit (hereinafter, referred to simply as a waveform generation unit) 13B that generates a plurality of time waveforms indicating temporal variations in the detection signal S1 at the respective scan positions. The signal processing unit 13 also includes a time waveform correction unit (hereinafter, referred to simply as a waveform correction unit) 13C that detects at least one peak in each of the plurality of time waveforms generated by the waveform generation unit 13B and corrects each of the time waveforms on the basis of each of the positions of the at least one peak in the time waveforms.

Now, a configuration of the waveform correction unit 13C will be described with reference to FIG. 4. FIG. 4 is a block diagram of the waveform correction unit 13C. In the present embodiment, the waveform correction unit 13C includes a peak detection unit 13C1 that detects peaks in each of the plurality of time waveforms generated by the waveform generation unit 13B. The peak detection unit 13C1 analyzes each of the time waveforms, and detects the positions (time coordinates) and amplitudes (signal intensities) of the peaks in the waveform.

The waveform correction unit 13C also includes a reference waveform determination unit 13C2 that determines a reference waveform (one time waveform) serving as a reference for correction among the time waveforms. The reference waveform determination unit 13C2 also determines the time waveforms other than the reference waveform as correction waveforms (other time waveforms).

The waveform correction unit 13C also includes a time coordinate correction unit 13C3 that determines a reference peak serving as a reference for correction among the peaks in each of the time waveforms and corrects the time coordinates of the correction waveforms to align the positions of the reference peaks of the correction waveforms to that of the reference peak of the reference waveform.

Referring to FIG. 3 again, the signal processing unit 13 includes an image generation unit 13D that generates an image (tomographic image) showing a tomographic structure of the sample SA on the basis of the plurality of time waveforms generated by the waveform generation unit 13B and the waveform correction unit 13C.

In the present embodiment, the image generation unit 13D includes a scan information acquisition unit 13D1 that obtains scan information about the pulse waves W1 in each time waveform, and a tomographic image generation unit 13D2 that generates a tomographic image in an irradiation direction (optical axis direction) of the sample SA with the pulse waves W1, i.e., in a direction perpendicular to the mounting surface MS of the mounting table 11T.

For example, the scan information acquisition unit 13D1 obtains information that associates the scan position of the scan head 11 corresponding to each time waveform, i.e., the irradiation position of the pulse waves W1 on the sample SA with the time waveform. The tomographic image generation unit 13D2 generates image data showing a cross section along the scan direction of the sample SA with the pulse waves W1 on the basis of the peaks of the time waveforms generated by the waveform generation unit 13B and the scan positions of the pulse waves W1 corresponding to the time waveforms.

Next, an operation example of the waveform generation unit 13B and the image generation unit 13D will be described with reference to FIGs. 5 and 6. FIG. 5 is a diagram illustrating an example of time waveforms WF0 of the sample SA generated by the waveform generation unit 13B. FIG. 6 is a diagram illustrating an example of a tomographic image IM0 of the sample SA generated by the image generation unit 13D on the basis of the time waveforms WF0 illustrated in FIG. 5. FIGs. 5 and 6 are diagrams illustrating the examples of the time waveforms WF0 and the tomographic image IM0 when no waveform correction by the waveform correction unit 13C is performed.

Initially, FIG. 5 illustrates an example of an actual cross section of the sample SA. For example, suppose that the sample SA includes a metal plate MP and a coating film CF formed on the metal plate MP. An operation example of the waveform generation unit 13B and the image generation unit 13D in a case where the sample SA has the shape illustrated in FIG. 5 in a direction along the scan line of the scan head 11 (scan direction D1) will be described.

For example, a portion on a top surface PL1 of the metal plate MP where no coating film CF is formed will be referred to as a first scan position P1. A portion where the coating film CF has a relatively small thickness will be referred to as a second scan position P2. A portion where the coating film CF has a relatively large thickness will be referred to as a third scan position P3.

At the first scan position P1, the reflected waves W2 include a terahertz wave pulse reflected from the top surface PL1 of the metal plate MP. The waveform generation unit 13B thus generates a waveform having a peak PK1 at a time coordinate (temporal position) t1 corresponding to the top surface PL1 of the metal plate MP as a time waveform WFO(P1) of the detection signal S1(P1) at the first scan position P1.

By contrast, at the second and third scan positions P2 and P3, the reflected waves W2 include a terahertz wave pulse reflected from a surface (top surface) PL2 of the coating film CF and a terahertz wave pulse reflected from an interface PL3 between the metal plate MP and the coating film CF (i.e., a portion PL11 of the top surface PL1 of the metal plate MP, covered with the coating film CF).

As a time waveform WF0(P2) of the detection signal S1(P2) at the second scan position P2, the waveform generation unit 13B thus generates a waveform having both a peak PK21 at a time coordinate (temporal positon) t2 corresponding to the surface PL2 of the coating film CF and a peak PK22 at a time coordinate t3 corresponding to the interface PL3 between the metal plate MP and the coating film CF.

Similarly, as a temporary waveform WFO(P3) of the detection signal S1(P3) at the third scan position P3, the waveform generation unit 13B generates a waveform having both a peak PK31 at a time coordinate (temporal position) t4 corresponding to the surface PL2 of the coating film CF and a peak PK32 at a time coordinate t5 corresponding to the interface PL3 between the metal plate MP and the coating film CF.

In such a manner, the waveform generation unit 13B generates a plurality of time waveforms WF0 indicating temporal variations in the detection signal S1 at a plurality of scan positions (for example, scan positions P1 to P3) of the pulse waves W1 on the sample SA. For example, the waveform generation unit 13B sets a predetermined time region TR0 as a data region for time waveforms WF0 and generates waveforms in the time region TR0.

FIG. 6 is a diagram illustrating the tomographic image IM0 generated by the image generation unit 13D on the basis of the time waveforms WF0. The left line LN1 in the tomographic image IM0 is a line corresponding to the exposed top surface PL1 of the metal plate MP. The upper right line LN2 is a line corresponding to the top surface PL2 of the coating film CF. The lower right line LN3 is a line corresponding to the interface PL3 between the metal plate MP and the coating film CF.

That the peak positions PK1, PK22, and PK32 are ones corresponding to the top surface PL1 (PL11) of the metal plate MP, i.e., the same surface can be determined, for example, on the basis of the numbers of peaks in the time waveforms WF0(P1) to WFO(P3), the positions (time coordinates) of the respective peaks, the amplitudes at the peak positions, etc.

For example, the image generation unit 13D determines the peaks having the largest (latest) time coordinates in the respective time waveforms WF0(P1) to WF0(P3) as ones corresponding to the same surface. Alternatively, for example, peaks detected in a predetermined time region may be determined as ones corresponding to the same surface. Peaks having an amplitude exceeding a predetermined threshold may be determined as ones corresponding to the same surface. Peaks corresponding to the same surface may be determined by using such a plurality of determination conditions.

As illustrated in FIG. 6, if the tomographic image IM0 is generated on the basis of the time waveforms WF0 generated by the waveform generation unit 13B, i.e., the time waveforms to which the correction processing by the waveform correction unit 13C is not applied (uncorrected), the top surface PL1 of the metal plate MP, which actually is flat, is displayed in a curved shape. The reason is that the terahertz waves at the first to third scan positions P1 to P3 have respective different optical lengths from the emission of the pulse waves W1 from the electromagnetic wave generation element 20 to the detection of the reflected waves W2 by the electromagnetic wave detection element 30.

Specifically, at the first scan position P1, the reflected waves W2 reflected from the top surface PL1 of the metal plate MP are detected without passing through media other than the air. By contrast, at the second scan positions P2 and P3, the reflected waves W2 reflected from the interface PL3 between the metal plate MP and the coating film CF are detected after transmission (reciprocation) through the coating film CF. The reflected waves W2 thus vary in the time of arrival at the electromagnetic wave detection element 30 (in the present embodiment, the time of arrival is delayed) as much as transmitted through the coating film CF due to the refractive index of the coating film CF.

For example, as illustrated in FIG. 5, the positions t3 and t5 of the peaks PK22 and PK32 corresponding to the interface PL3 between the metal plate MP and the coating film CF in the time waveforms WF0(P2) and WFO(P3) corresponding to the second and third scan positions P2 and P3 therefore deviate from the position t1 of the peak PK1 in the time waveform WF0(P1) at the first scan position P1. The actually-flat surface PL1 is thereby displayed in a curved shape. If a tomographic image of the sample SA is generated by the time-of-flight method, an image showing a cross-sectional structure different from the actual one can thus be generated like the tomographic image IM0.

Next, an operation of the waveform correction unit 13C and the image generation unit 13D based thereon will be described with reference to FIGs. 7 and 8. FIG. 7 is a diagram illustrating (corrected) time waveforms WF1 and WF2 generated by the waveform correction unit 13C. FIG. 8 is a diagram illustrating a tomographic image IM1 of the sample SA generated on the basis of the corrected time waveforms WF1 and WF2.

Initially, as illustrated in FIG. 7, the waveform correction unit 13C determines a reference waveform (one time waveform) WF1 serving as a reference for correction and correction waveforms (other time waveforms) WF2 to be corrected among the time waveforms WF0 by using the reference waveform determination unit 13C2.

The time coordinate correction unit 13C3 of the waveform correction unit 13C determines a reference peak in each of the time waveforms WF0 on the basis of the positions, amplitudes, and number of peaks in each of the time waveforms WF0. The reference peak in each time waveform WF0 can be determined in consideration of various conditions, such as that the peak falls within a predetermined range of time coordinates, that the peak has an amplitude greater than or equal to a predetermined threshold, and/or that the peak comes after a predetermined number of peaks among a plurality of peaks in the same waveform.

The time coordinate correction unit 13C3 corrects the time coordinates of the correction waveforms WF2 to align the positions of the reference peaks in the correction waveforms WF2 to that of the reference peak in the reference waveform WF1. For example, the time coordinate correction unit 13C3 generates new time waveforms where the time coordinates of the respective reference peaks are aligned.

In the present embodiment, the peak detection unit 13C1 of the waveform correction unit 13C detects the peaks PK1 to PK32 of the time waveforms WF0. The reference waveform determination unit 13C2 determines the time waveform WF0(P1) at the first scan position P1 as the reference waveform WF1, and determines the time waveforms WF0(P2) and WF0(P3) at the second and third scan positions P2 and P3 as the correction waveforms WF2.

The time coordinate correction unit 13C3 also determines (selects) the peak PK1 of the time waveform WF0(P1), the peak PK22 of the time waveform WF0(P2), and the peak PK32 of the time waveform WFO(P3) as the reference peaks serving as references for correction. The time coordinate correction unit 13C3 also corrects the time coordinates of the correction waveforms WF2 to align the positions of the peaks PK22 and PK32 that are the reference peaks of the correction waveforms WF2 to that of the reference peak PK1 in the reference waveform WF1.

As illustrated in FIG. 7, the time coordinate correction unit 13C3 corrects the time coordinates of the correction waveforms WF2(P2) and WF2(P3) to align the positions of the reference peaks PK22 and PK32 in the correction waveforms WF2 to that of the reference peak PK1 in the reference waveform WF1. Initially, the time coordinate of the peak PK22 in the correction waveform WF2(P2) is thereby moved (shifted) from the coordinate t3 to a coordinate t31 that is the same coordinate as the coordinate t1. In the present embodiment, the entire correction waveform WF2(P2) is offset as much as a difference A between the coordinates t3 and t1.

Similarly, the time coordinate of the peak PK32 in the correction waveform WF2(P3) is shifted from the coordinate t5 to a coordinate t51 that is the same coordinate as the coordinate t1. The entire correction waveform WF2(P3) is offset as much as a difference B between the coordinates t5 and t1.

Alternatively, the time coordinate correction unit 13C3 may detect time waveforms WF0 including no reference peak (i.e., peak corresponding to the same surface of the sample SA) among the time waveforms WF0, for example, on the basis of peak positions, amplitudes, etc. Such time waveforms can be excluded from correction.

Alternatively, for example, the reference waveform WF1, the correction waveforms WF2, and the reference peaks of the respective time waveforms may be specified by an operator who observes the uncorrected tomographic image IM0. In other words, for example, the reference waveform WF1 may be determined by the reference waveform determination unit 13C2 or specified from outside.

For example, the reference waveform determination unit 13C2 may determine an arbitrary one of the time waveforms WF0 as the reference waveform WF1. The reference waveform determination unit 13C2 may determine a time waveform WF0 including a peak having the smallest (earliest) time coordinate among the reference peaks corresponding to the same surface, as the reference waveform WF1.

FIG. 8 is a diagram illustrating the tomographic image IM1 generated on the basis of the corrected time waveforms WF1 and WF2. As illustrated in FIG. 8, for example, lines LN11 and LN31 representing the top surface PL1 of the metal plate MP and the interface PL3 between the metal plate MP and the coating film CF, which are the same surface, are displayed in a flat shape. It can be seen that an image close to the actual cross-sectional structure is obtained.

In the present embodiment, the time coordinates of the correction waveforms WF2 are described to be offset. In other words, the waveform correction unit 13C is described to make corrections by only shifting the time coordinates without adjusting the shape of the correction waveforms WF2. Such corrections made by the waveform correction unit 13C significantly improve the accuracy of the tomographic image as illustrated in FIGs. 6 and 8.

The same surface of the sample SA corresponding to the reference peaks is displayed in a flat shape by aligning the positions of the reference peaks in the respective time waveforms. As a result, the same surface is displayed in a flat shape, for example, even if the mounting table 11T is oblique to the scan head 11. This eliminates the need for strict positioning, for example, between the mounting table 11T, i.e., the sample SA and the scan head 11. Complicated mechanisms for performing the strict positioning are not needed, either. That is, an accurate tomographic image can be easily obtained by providing the signal processing unit 13 with the waveform-correcting section (circuit).

However, the configuration of the waveform correction unit 13C is not limited thereto. For example, the waveform correction unit 13C may be configured to fine adjust the peak positions in the waveforms after the correction of the time coordinates. For example, the waveform correction unit 13C may calculate the refractive indexes of the layers (for example, the metal plate MP and the coating film CF) of the sample SA, and adjust the amounts of shift in the time coordinates of the respective peaks on the basis of the refractive indexes and the distance between the peaks in the waveforms (for example, between the peaks PK21 and PK22 in FIG. 5). This enables more accurate generation and display of a tomographic image, so that the cross-sectional structure of the sample SA can be found out more accurately.

Note that the offsetting of the time coordinates produces a region (time region TR1) where all the time coordinates overlap and a region where time coordinates are partly missing in the corrected time waveforms WF1 and WF2.

For example, the time coordinate correction unit 13C3 may set the time region TR1 where the time coordinates of all the time waveforms WF1 and WF2 overlap as the data region of the corrected time waveforms WF1 and WF2, and delete the other missing regions. Alternatively, the time coordinate correction unit 13C3 may provide new time coordinates for the time waveforms WF1 and WF2 to fill the non-overlapping time region. The time coordinate correction unit 13C3 may apply the waveforms on the offset, protruding time coordinates to the new time coordinates.

FIG. 9 is a diagram illustrating an example of a measurement operation flow by the optical measurement apparatus 10. The optical measurement apparatus 10 operates in accordance with the flow illustrated in FIG. 9, for example. Initially, the scan head 11 (irradiation unit) irradiates the surface of the sample SA with the pulse waves W1 in a scanning manner. The scan head 11 (reception unit) also receives the reflected waves W2 from the scanned positions of the sample SA (step S11). The electromagnetic wave detection element 30 in the scan head 11 generates the detection signal S1 indicating the reflected waves W2. The signal acquisition unit 13A of the signal processing unit 13 obtains the detection signal S1 representing the reflected waves W2 from the sample SA.

The waveform generation unit 13B then generates time waveforms WF0 indicating temporal variations in the detection signal S1 at the respective scan positions (for example, scan positons P1 to P3) of the pulse waves W1 (step S12). Next, the image generation unit 13D generates a tomographic image IM0 of the sample SA on the basis of the time waveforms WF0. The display unit 14 displays the tomographic image IM0 (step S13).

The waveform correction unit 13C then detects the peaks in each of the time waveforms WF0 by using the peak detection unit 13C1 (step S14). The waveform correction unit 13C also corrects each of the time waveforms WF0 on the basis of the positions of the peaks in each of the time waveforms WF0 (step S15).

In the present embodiment, the reference waveform determination unit 13C2 initially determines the reference waveform WF1 serving as a reference for correction (step S15A). Next, the time coordinate correction unit 13C3 determines the reference peaks in the respective time waveforms WF0 (step S15B). The time coordinate correction unit 13C3 then corrects the time coordinates of the correction waveforms WF2 to align the reference peaks of the correction waveforms WF2 to the reference peak of the reference waveform WF1 (step S15C).

The image generation unit 13D generates a tomographic image IM1 of the sample SA on the basis of the time waveforms WF1 and WF2 corrected by the waveform correction unit 13C. The display unit 14 displays the tomographic image IM1 (step S16).

In the present embodiment, the optical measurement apparatus 10 is described to include the excitation light source unit 12, the display unit 14, and the control unit 15. However, in examples not falling under the scope of the invention, the optical measurement apparatus 10 does not need to include the excitation light source unit 11, the display unit 14, and the control unit 15. In the present embodiment, the optical measurement apparatus 10 is also described to include the mounting table 11T for the sample SA. However, in examples not falling under the scope of the invention, the optical measurement apparatus 10 does not need to include the mounting table 11T. Moreover, the configuration of the signal processing unit 13 and the waveform correction unit 13C is just an example.

In the present embodiment, the optical measurement apparatus 10 is also described to include the scan head 11 including the electromagnetic wave generation element 20 and the electromagnetic wave detection element 30. The optical measurement apparatus 10 includes an irradiation unit that scans and irradiates the sample SA with the pulse waves W1 and a reception unit that receives the reflected waves W2 from the sample SA. For example, the electromagnetic wave generation element 20 and the electromagnetic wave detection element 30 do not need to be built in the scan head 11. For example, the scan head 11 may include an emission unit of the pulse waves W1 and a reception unit of the reflected waves W2.

The present embodiment has also dealt with the case where the cross-sectional structure of the sample SA is analyzed by measuring terahertz waves as the pulse waves W1 and the reflected waves W2. However, the optical measurement apparatus 10 may be configured to emit and measure pulsed electromagnetic waves and thereby analyze the sample SA. For example, if electromagnetic waves other than terahertz waves, such as infrared rays, are used, the excitation light source unit 11 does not need to be provided.

In the present embodiment, the tomographic image generation unit 13D2 is described to generate a tomographic image in the direction perpendicular to the mounting surface MS of the mounting table 11T for the sample SA. However, the tomographic image generation unit 13D2 may generate not only a tomographic image of the sample SA in the direction perpendicular to the mounting surface MS but a tomographic image in a direction parallel to the mounting surface MS as well.

For example, the optical measurement apparatus 10 may be configured so that the scan head 11 scans the pulse waves W1 two-dimensionally in the in-plane directions of the mounting surface MS. For example, the tomographic image generation unit 13D2 may generate image data showing a cross section of the sample SA in a direction parallel to the mounting surface MS depending on the distance from the mounting surface MS. The tomographic image generation unit 13D2 may not only generate an image showing a cross section of the sample SA (in other words, an internal image of the sample SA) but also generate image data showing the surface of the sample SA, such as the surface of the sample SA on the scan head 11 side or the surface of the sample SA on the mounting table 11T side.

As described above, in the present embodiment, the optical measurement apparatus 10 includes the irradiation unit (scan head 11) that scans and irradiates the sample SA with the pulse waves W1, the reception unit (electromagnetic wave detection element 30) that receives the reflected waves W2 of the pulse waves W1 from the sample SA, and the waveform generation unit 13B that generates the time waveforms WF0 of the signal S1 representing the reflected waves W2 at the respective scan positions P1 to P3.

The optical measurement apparatus 10 also includes the waveform correction unit 13C that detects at least one peak in each of the time waveforms WF0 and corrects each of the time waveforms WF0 on the basis of the positions of the peaks in each of the time waveforms WF0. An optical measurement apparatus 10 that can perform appropriate processing on the time waveforms WF0 of the electromagnetic waves from the sample SA at the respective scan positions P1 to P3 to accurately and clearly find out the cross-sectional configuration of the sample SA can thus be provided.

The present invention can also be implemented as an optical measurement method using the pulse waves W1 through the procedure illustrated in FIG. 9, for example.

Specifically, for example, the measurement method according to the present invention includes the steps of: scanning and irradiating the sample SA with the pulse waves W1 (step S11); receiving the reflected waves W2 of the pulse waves W1 from the sample SA (step S11); generating temporary waveforms WF0 of the signal S1 of the reflected waves W2 at the respective scan positions P1 to P3 (step S12); and detecting at least one peak in each of the plurality of time waveforms WF0 (step S14), and correcting each of the time waveforms WF0 on the basis of the positions of the peaks in each of the time waveforms WF0 (step S15).

A measurement method that is capable of performing appropriate processing on the time waveforms WF0 of the electromagnetic waves from the sample SA at the respective scan positions P1 to P3 to accurately and clearly find out the cross-sectional structure of the sample SA can thus be provided.

The present invention can also be implemented as a program for causing an optical measurement apparatus to preform the operation flow illustrated in FIG. 9, for example.

Specifically, for example, the program according to the present invention causes an optical measurement apparatus to include the irradiation unit (scan head 11) that scans and irradiates the sample SA with the pulse waves W1, the reception unit (electromagnetic wave detection element 30) that receives the reflected waves W2 of the pulse waves W1 from the sample SA, and the waveform generation unit 13B that generates time waveforms WF0 of the signal S1 representing the reflected waves W2 at the respective scan positions P1 to P3.

The program according to the present invention also causes operation as the waveform correction unit 13C that detects at least one peak in each of the plurality of time waveforms WF0 and corrects each of the time waveforms WF0 on the basis of the positions of the peaks in each of the time waveforms WF0.

The present invention can also be implemented as a recording medium on which the foregoing program is recorded. A program and a recording medium capable of performing appropriate processing on the time waveforms WF0 of the electromagnetic waves from the sample SA at the respective scan positions P1 to P3 to accurately and clearly find out the cross-sectional structure of the sample SA can thus be provided.

### REFERENCE SIGNS LIST

- 10: optical measurement apparatus
- 11: scan head (irradiation unit)
- 13: signal processing unit
- 13B: waveform generation unit
- 13C: waveform correction unit
- 13C4: time coordinate correction unit

## Claims

1. An optical measurement apparatus (10) comprising:
a mounting table (11T) having a mounting surface (MS);
an irradiation unit (11) configured to irradiate a sample (SA) mounted on the mounting surface (MS) with terahertz waves as pulse waves (W1) while changing the respective irradiation positions along a direction parallel to the mounting surface (MS);
a reception unit (30) configured to receive reflected waves (W2) of said pulse waves (W1) from said sample (SA) so as to generate signals representing the reflected waves (W2) ;
a waveform generation unit (13B) configured to generate time waveforms representing the signal strength of said reflected waves (W2) versus time at respective ones of said irradiation positions; and
a waveform correction unit (13C) configured to detect at least one peak in each of said time waveforms, and correct each of said time waveforms on a basis of each of positions of said at least one peak in said time waveforms,
**characterized in that** said waveform correction unit (13C) includes a correction waveform determination unit (13C2) configured to determine one time waveform serving as a reference for correction among said time waveforms; and a time coordinate correction unit (13C3) configured to determine a reference peak as a reference for correction from said at least one peak in each of said time waveforms, and correct time coordinates of said other time waveforms to align the position of said reference peak in each of the other time waveforms with that of said reference peak in said one time waveform so as to correct positional deviations of the reference peaks in the time axis direction at the irradiation positions being different in a direction parallel to the mounting surface (MS).

2. The optical measurement apparatus (10) according to claim 1, wherein said time coordinate correction unit (13C3) determines said reference peak on a basis of the position and an amplitude of said at least one peak and a number of said at least one peak in each of said time waveforms.

3. The optical measurement apparatus (10) according to any one of claims 1 to 2, comprising an image generation unit (13D) configured to generate a tomographic image of said sample (SA) on a basis of said time waveforms corrected by said waveform correction unit (13C).

4. A measurement method for an optical measurement apparatus (10) comprising the steps of:
a scanning step for irradiating a sample (SA) mounted on a mounting surface (MS) with terahertz waves as pulse waves (W1) while changing the respective irradiation positions along a direction parallel to the mounting surface (MS);
a receiving step for receiving reflected waves (W2) of said pulse waves (W1) from said sample (SA) so as to generate signals representing the reflected waves (W2);
a generating step for generating time waveforms representing the signal strength of said reflected waves (W2) versus time at respective ones of said irradiation positions; and
a correcting step for detecting at least one peak in each of said time waveforms, and correcting each of said time waveforms on a basis of each of positions of said at least one peak in said time waveforms,
**characterized in that** the correcting step includes determining a reference peak for each of time waveforms from peaks included in each of the time waveforms generated in the generating step when each of the irradiation positions is changed along a direction parallel to the mounting surface (MS), setting one time waveform as a reference waveform for correction, aligning each position of the reference peak of the other time waveforms with respect to the reference peak of the reference waveform so as to correct positional deviations of the reference peaks in the time axis direction at the irradiation positions being different in a direction parallel to the mounting surface (MS).

5. A program causing an optical measurement apparatus (10) to execute the steps of:
a scanning step for irradiating a sample (SA) mounted on a mounting surface (MS) with terahertz waves as pulse waves (W1) while changing the respective irradiation positions along a direction parallel to the mounting surface (MS);
a receiving step for receiving reflected waves (W2) of said pulse waves (W1) from said sample (SA) so as to generate signals representing the reflected waves (W2);
a generating step for generating time waveforms representing the signal strength of said reflected waves (W2) versus time at respective ones of said irradiation positions; and
a correcting step for detecting at least one peak in each of said time waveforms, and correcting each of said time waveforms on a basis of each of positions of said at least one peak in said time waveforms,
**characterized in that** the correcting step includes determining a reference peak for each of time waveforms from peaks included in each of the time waveforms generated in the generating step when each of the irradiation positions is changed along a direction parallel to the mounting surface (MS), setting one time waveform as a reference waveform for correction, aligning each position of the reference peak of the other time waveforms with respect to the reference peak of the reference waveform so as to correct positional deviations of the reference peaks in the time axis direction caused by the irradiation positions being different in a direction parallel to the mounting surface (MS).

6. A recording medium on which is recorded a program for causing an optical measurement apparatus (10) to execute the steps of:
a scanning step for irradiating a sample (SA) mounted on a mounting surface (MS) with terahertz waves as pulse waves (W1) while changing the respective irradiation positions along a direction parallel to the mounting surface (MS);
a receiving step for receiving reflected waves (W2) of said pulse waves (W1) from said sample (SA) so as to generate signals representing the reflected waves (W2);
a generating step for generating time waveforms representing the signal strength of said reflected waves (W2) versus time at respective ones of said irradiation positions; and
a correcting step for detecting at least one peak in each of said time waveforms, and correcting each of said time waveforms on a basis of each of positions of said at least one peak in said time waveforms,
**characterized in that** the correcting step includes determining a reference peak for each of time waveforms from peaks included in each of the time waveforms generated in the generating step when each of the irradiation positions is changed along a direction parallel to the mounting surface (MS), setting one time waveform as a reference waveform for correction, aligning each position of the reference peak of the other time waveforms with respect to the reference peak of the reference waveform so as to correct positional deviations of the reference peaks in the time axis direction at the irradiation positions being different in a direction parallel to the mounting surface (MS).

## Patentansprüche

1. Optische Messvorrichtung (10) umfassend:
einen Montagetisch (11T), der eine Montagefläche (MS) aufweist;
eine Bestrahlungseinheit (11), die eingerichtet ist, eine Probe (SA), die auf der Montagefläche (MS) montiert ist, mit Terahertzwellen als Pulswellen (W1) zu bestrahlen, während die jeweiligen Bestrahlungspositionen entlang einer zur Montagefläche (MS) parallelen Richtung geändert werden;
eine Empfangseinheit (30), die eingerichtet ist, reflektierte Wellen (W2) der Pulswellen (W1) von der Probe (SA) zu empfangen, um Signale zu erzeugen, die die reflektierten Wellen (W2) darstellen;
eine Wellenformerzeugungseinheit (13B), die eingerichtet ist, Zeitwellenformen zu erzeugen, die die Signalstärke der reflektierten Wellen (W2) gegenüber der Zeit an den jeweiligen Bestrahlungspositionen darstellen; und
eine Wellenformkorrektureinheit (13C), die eingerichtet ist, mindestens einen Peak in jeder der Zeitwellenformen zu detektieren und jede der Zeitwellenformen auf Grundlage jeder der Positionen des mindestens einen Peaks in den Zeitwellenformen zu korrigieren,
**dadurch gekennzeichnet, dass** die Wellenformkorrektureinheit (13C) eine Korrekturwellenformbestimmungseinheit (13C2) umfasst, die eingerichtet ist, eine Zeitwellenform zu bestimmen, die
als Referenz für die Korrektur unter den Zeitwellenformen dient; und eine Zeitkoordinatenkorrektureinheit (13C3), die eingerichtet ist, einen Referenzpeak als Referenz für die Korrektur aus dem mindestens einen Peak in jeder der Zeitwellenformen zu bestimmen und Zeitkoordinaten der anderen Zeitwellenformen zu korrigieren, um die Position des Referenzpeaks in jeder der anderen Zeitwellenformen mit derjenigen des Referenzpeaks in der einen Zeitwellenform auszurichten, um Positionsabweichungen der Referenzpeaks in der Zeitachsenrichtung an den Bestrahlungspositionen zu korrigieren, die in einer zur Montagefläche (MS) parallelen Richtung unterschiedlich sind.

2. Optische Messvorrichtung (10) nach Anspruch 1, wobei die Zeitkoordinatenkorrektureinheit (13C3) den Referenzpeak auf Grundlage der Position und einer Amplitude des mindestens einen Peaks und einer Anzahl des mindestens einen Peaks in jeder der Zeitwellenformen bestimmt.

3. Optische Messvorrichtung (10) nach einem der Ansprüche 1 bis 2, umfassend eine Bilderzeugungseinheit (13D), die eingerichtet ist, ein tomografisches Bild der Probe (SA) auf Grundlage der durch die Wellenformkorrektureinheit (13C) korrigierten Zeitwellenformen zu erzeugen.

4. Messverfahren für eine optische Messvorrichtung (10) umfassend die Schritte:
einen Abtastschritt zum Bestrahlen einer auf einer Montagefläche (MS) montierten Probe (SA) mit Terahertzwellen als Pulswellen (W1), während die jeweiligen Bestrahlungspositionen entlang einer zur Montagefläche (MS) parallelen Richtung geändert werden;
einen Empfangsschritt zum Empfangen reflektierter Wellen (W2) der Pulswellen (W1) von der Probe (SA), um Signale zu erzeugen, die die reflektierten Wellen (W2) darstellen;
einen Erzeugungsschritt zum Erzeugen von Zeitwellenformen, die die Signalstärke der reflektierten Wellen (W2) gegenüber der Zeit an den jeweiligen Bestrahlungspositionen darstellen; und
einen Korrekturschritt zum Detektieren mindestens eines Peaks in jeder der Zeitwellenformen und zum Korrigieren jeder der Zeitwellenformen auf Grundlage jeder der Positionen des mindestens einen Peaks in den Zeitwellenformen,
**dadurch gekennzeichnet, dass** der Korrekturschritt das Bestimmen eines Referenzpeaks für jede der Zeitwellenformen aus Peaks, die in jeder der im Erzeugungsschritt erzeugten Zeitwellenformen enthalten sind, wenn jede der Bestrahlungspositionen entlang einer zur Montagefläche (MS) parallelen Richtung geändert wird, das Einstellen einer Zeitwellenform als Referenzwellenform für die Korrektur und das Ausrichten jeder Position des Referenzpeaks der anderen Zeitwellenformen in Bezug auf den Referenzpeak der Referenzwellenform umfasst, um Positionsabweichungen der Referenzpeaks in der Zeitachsenrichtung an den Bestrahlungspositionen zu korrigieren, die in einer zur Montagefläche (MS) parallelen Richtung unterschiedlich sind.

5. Programm, das eine optische Messvorrichtung (10) veranlasst, die Schritte auszuführen:
einen Abtastschritt zum Bestrahlen einer auf einer Montagefläche (MS) montierten Probe (SA) mit Terahertzwellen als Pulswellen (W1), während die jeweiligen Bestrahlungspositionen entlang einer zur Montagefläche (MS) parallelen Richtung geändert werden;
einen Empfangsschritt zum Empfangen reflektierter Wellen (W2) der Pulswellen (W1) von der Probe (SA), um Signale zu erzeugen, die die reflektierten Wellen (W2) darstellen;
einen Erzeugungsschritt zum Erzeugen von Zeitwellenformen, die die Signalstärke der reflektierten Wellen (W2) gegenüber der Zeit an den jeweiligen Bestrahlungspositionen darstellen; und
einen Korrekturschritt zum Detektieren mindestens eines Peaks in jeder der Zeitwellenformen und zum Korrigieren jeder der Zeitwellenformen auf Grundlage jeder der Positionen des mindestens einen Peaks in den Zeitwellenformen,
**dadurch gekennzeichnet, dass** der Korrekturschritt das Bestimmen eines Referenzpeaks für jede der Zeitwellenformen aus Peaks, die in jeder der im Erzeugungsschritt erzeugten Zeitwellenformen enthalten sind, wenn jede der Bestrahlungspositionen entlang einer zur Montagefläche (MS) parallelen Richtung geändert wird, das Einstellen einer Zeitwellenform als Referenzwellenform für die Korrektur und das Ausrichten jeder Position des Referenzpeaks der anderen Zeitwellenformen in Bezug auf den Referenzpeak der Referenzwellenform umfasst, um Positionsabweichungen der Referenzpeaks in der Zeitachsenrichtung zu korrigieren, die dadurch verursacht werden, dass die Bestrahlungspositionen in einer zur Montagefläche (MS) parallelen Richtung unterschiedlich sind.

6. Aufzeichnungsmedium, auf dem ein Programm aufgezeichnet ist, das eine optische Messvorrichtung (10) veranlasst, die Schritte auszuführen:
einen Abtastschritt zum Bestrahlen einer auf einer Montagefläche (MS) montierten Probe (SA) mit Terahertzwellen als Pulswellen (W1), während die jeweiligen Bestrahlungspositionen entlang einer zur Montagefläche (MS) parallelen Richtung geändert werden;
einen Empfangsschritt zum Empfangen reflektierter Wellen (W2) der Pulswellen (W1) von der Probe (SA), um Signale zu erzeugen, die die reflektierten Wellen (W2) darstellen;
einen Erzeugungsschritt zum Erzeugen von Zeitwellenformen, die die Signalstärke der reflektierten Wellen (W2) gegenüber der Zeit an den jeweiligen Bestrahlungspositionen darstellen; und
einen Korrekturschritt zum Detektieren mindestens eines Peaks in jeder der Zeitwellenformen und zum Korrigieren jeder der Zeitwellenformen auf Grundlage jeder der Positionen des mindestens einen Peaks in den Zeitwellenformen,
**dadurch gekennzeichnet, dass** der Korrekturschritt das Bestimmen eines Referenzpeaks für jede der Zeitwellenformen aus Peaks, die in jeder der im Erzeugungsschritt erzeugten Zeitwellenformen enthalten sind, wenn jede der Bestrahlungspositionen entlang einer zur Montagefläche (MS) parallelen Richtung geändert wird, das Einstellen einer Zeitwellenform als Referenzwellenform für die Korrektur und das Ausrichten jeder Position des Referenzpeaks der anderen Zeitwellenformen in Bezug auf den Referenzpeak der Referenzwellenform umfasst, um Positionsabweichungen der Referenzpeaks in der Zeitachsenrichtung an den Bestrahlungspositionen zu korrigieren, die in einer zur Montagefläche (MS) parallelen Richtung unterschiedlich sind.

## Revendications

1. Appareil de mesurage optique (10) comprenant :
une table de montage (11T) présentant une surface de montage (MS) ;
une unité d'irradiation (11) configurée pour irradier un échantillon (SA) monté sur la surface de montage (MS) avec des ondes térahertz sous forme d'ondes d'impulsion (W1) tout en changeant les positions d'irradiation respectives le long d'une direction parallèle à la surface de montage (MS) ;
une unité de réception (30) configurée pour recevoir des ondes réfléchies (W2) desdites ondes d'impulsion (W1) provenant dudit échantillon (SA) de manière à générer des signaux représentant les ondes réfléchies (W2) ;
une unité de génération de formes d'onde (13B) configurée pour générer des formes d'onde temporelles représentant l'intensité du signal desdites ondes réfléchies (W2) en fonction du temps à des positions d'irradiation respectives parmi lesdites positions d'irradiation ; et
une unité de correction de forme d'onde (13C) configurée pour détecter au moins un pic dans chacune desdites formes d'onde temporelles et corriger chacune desdites formes d'onde temporelles sur la base de chacune de positions dudit au moins un pic dans lesdites formes d'onde temporelles,
**caractérisé en ce que** ladite unité de correction de forme d'onde (13C) comprend une unité de détermination de forme d'onde de correction (13C2) configurée pour déterminer une forme d'onde temporelle servant de référence pour la correction parmi lesdites formes d'onde temporelles ; et une unité de correction de coordonnées temporelles (13C3) configurée pour déterminer un pic de référence servant de référence pour la correction à partir dudit au moins un pic dans chacune desdites formes d'onde temporelles, et corriger les coordonnées temporelles desdites autres formes d'onde temporelles afin d'aligner la position dudit pic de référence dans chacune des autres formes d'onde temporelles sur celle dudit pic de référence dans ladite forme d'onde temporelle afin de corriger les écarts de position des pics de référence dans la direction de l'axe temporel aux positions d'irradiation qui sont différentes dans une direction parallèle à la surface de montage (MS).

2. Appareil de mesurage optique (10) selon la revendication 1, dans lequel ladite unité de correction de coordonnées temporelles (13C3) détermine ledit pic de référence sur la base de la position et d'une amplitude dudit au moins un pic et d'un nombre dudit au moins un pic dans chacune desdites formes d'onde temporelles.

3. Appareil de mesurage optique (10) selon l'une des revendications 1 à 2, comprenant une unité de génération d'image (13D) configurée pour générer une image tomographique dudit échantillon (SA) sur la base desdites formes d'onde temporelles corrigées par ladite unité de correction de forme d'onde (13C).

4. Procédé de mesurage pour un appareil de mesurage optique (10) comprenant les étapes suivantes :
une étape de balayage pour irradier un échantillon (SA) monté sur une surface de montage (MS) avec des ondes térahertz sous forme d'ondes d'impulsion (W1) tout en changeant les positions d'irradiation respectives le long d'une direction parallèle à la surface de montage (MS) ;
une étape de réception pour recevoir des ondes réfléchies (W2) desdites ondes d'impulsion (W1) provenant dudit échantillon (SA) de manière à générer des signaux représentant les ondes réfléchies (W2) ;
une étape de génération pour générer des formes d'onde temporelles représentant l'intensité du signal desdites ondes réfléchies (W2) en fonction du temps à des positions d'irradiation respectives parmi lesdites positions d'irradiation ; et
une étape de correction pour détecter au moins un pic dans chacune desdites formes d'onde temporelles et corriger chacune desdites formes d'onde temporelles sur la base de chacune de positions dudit au moins un pic dans lesdites formes d'onde temporelles,
**caractérisé en ce que** l'étape de correction comprend la détermination d'un pic de référence pour chacune de formes d'onde temporelles à partir de pics inclus dans chacune des formes d'onde temporelles générées lors de l'étape de génération lorsque chacune des positions d'irradiation est changée le long d'une direction parallèle à la surface de montage (MS), le réglage d'une forme d'onde temporelle comme forme d'onde de référence pour la correction, et l'alignement de chaque position du pic de référence des autres formes d'onde temporelles par rapport au pic de référence de la forme d'onde de référence de manière à corriger les écarts de position des pics de référence dans la direction de l'axe temporel aux positions d'irradiation qui sont différentes dans une direction parallèle à la surface de montage (MS).

5. Programme amenant un appareil de mesurage optique (10) à exécuter les étapes suivantes :
une étape de balayage pour irradier un échantillon (SA) monté sur une surface de montage (MS) avec des ondes térahertz sous forme d'ondes d'impulsion (W1) tout en changeant les positions d'irradiation respectives le long d'une direction parallèle à la surface de montage (MS) ;
une étape de réception pour recevoir des ondes réfléchies (W2) desdites ondes d'impulsion (W1) provenant dudit échantillon (SA) de manière à générer des signaux représentant les ondes réfléchies (W2) ;
une étape de génération pour générer des formes d'onde temporelles représentant l'intensité du signal desdites ondes réfléchies (W2) en fonction du temps à des positions d'irradiation respectives parmi lesdites positions d'irration ; et
une étape de correction pour détecter au moins un pic dans chacune desdites formes d'onde temporelles et corriger chacune desdites formes d'onde temporelles sur la base de chacune de positions dudit au moins un pic dans lesdites formes d'onde temporelles,
**caractérisé en ce que** l'étape de correction comprend la détermination d'un pic de référence pour chacune de formes d'onde temporelles à partir de pics inclus dans chacune des formes d'onde temporelles générées lors de l'étape de génération lorsque chacune des positions d'irradiation est changée le long d'une direction parallèle à la surface de montage (MS), le réglage d'une forme d'onde temporelle comme forme d'onde de référence pour la correction, et l'alignement de chaque position du pic de référence des autres formes d'onde temporelles par rapport au pic de référence de la forme d'onde de référence de manière à corriger les écarts de position des pics de référence dans la direction de l'axe temporel causés par le fait que les positions d'irradiation sont différentes dans une direction parallèle à la surface de montage (MS).

6. Support d'enregistrement sur lequel est enregistré un programme amenant un appareil de mesurage optique (10) à exécuter les étapes suivantes :
une étape de balayage pour irradier un échantillon (SA) monté sur une surface de montage (MS) avec des ondes térahertz sous forme d'ondes d'impulsion (W1) tout en changeant les positions d'irradiation respectives le long d'une direction parallèle à la surface de montage (MS) ;
une étape de réception pour recevoir des ondes réfléchies (W2) desdites ondes d'impulsion (W1) provenant dudit échantillon (SA) de manière à générer des signaux représentant les ondes réfléchies (W2) ;
une étape de génération pour générer des formes d'onde temporelles représentant l'intensité du signal desdites ondes réfléchies (W2) en fonction du temps à des positions d'irradiation respectives parmi lesdites positions d'irradiation ; et
une étape de correction pour détecter au moins un pic dans chacune desdites formes d'onde temporelles et corriger chacune desdites formes d'onde temporelles sur la base de chacune de positions dudit au moins un pic dans lesdites formes d'onde temporelles,
**caractérisé en ce que** l'étape de correction comprend la détermination d'un pic de référence pour chacune de formes d'onde temporelles à partir de pics inclus dans chacune des formes d'onde temporelles générées lors de l'étape de génération lorsque chacune des positions d'irradiation est changée le long d'une direction parallèle à la surface de montage (MS), le réglage d'une forme d'onde temporelle comme forme d'onde de référence pour la correction, et l'alignement de chaque position du pic de référence des autres formes d'onde temporelles par rapport au pic de référence de la forme d'onde de référence de manière à corriger les écarts de position des pics de référence dans la direction de l'axe temporel aux positions d'irradiation qui sont différentes dans une direction parallèle à la surface de montage (MS).
